(19) Europäisches Patentamt / European Patent Office / Office européen des brevets

(11) **EP 4 734 173 A1**

(12) **EUROPEAN PATENT APPLICATION**
published in accordance with Art. 153(4) EPC

(43) Date of publication:
**29.04.2026 Bulletin 2026/18**

(21) Application number: **24825594.5**

(22) Date of filing: **10.05.2024**

(51) International Patent Classification (IPC):
**H01M 4/36** (2006.01)          **H01M 4/62** (2006.01)

(52) Cooperative Patent Classification (CPC):
Y02E 60/10

(86) International application number:
**PCT/JP2024/017534**

(87) International publication number:
**WO 2024/262185 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.06.2023 JP 2023102847**

(71) Applicants:
• Panasonic Holdings Corporation
  Kadoma-shi, Osaka 571-8501 (JP)

• **TOYOTA JIDOSHA KABUSHIKI KAISHA**
  **Toyota-Shi,**
  **Aichi-Ken 471-8571 (JP)**

(72) Inventors:
• **SUGIMOTO, Yuta**
  **Kadoma-shi, Osaka 571-0057 (JP)**
• **HASHIMOTO, Kazuya**
  **Kadoma-shi, Osaka 571-0057 (JP)**
• **MIZUNO, Keita**
  **Kadoma-shi, Osaka 571-0057 (JP)**

(74) Representative: **Eisenführ Speiser**
  **Patentanwälte Rechtsanwälte PartGmbB**
  **Gollierstraße 4**
  **80339 München (DE)**

(54) **COATED ACTIVE MATERIAL, POSITIVE ELECTRODE MATERIAL, POSITIVE ELECTRODE, AND BATTERY**

(57)     A coated active material 100 of the present disclosure includes a positive electrode active material 101 and a coating layer 102 including a first solid electrolyte and coating at least a portion of a surface of the positive electrode active material 101. The first solid electrolyte contains Li, Ti, M, and X, the M is at least one selected from the group consisting of metalloid elements and metal elements other than Li and Ti, and the X is at least one selected from the group consisting of F, Cl, Br, and I. A quotient obtained by dividing a ratio (%) of a mass of the first solid electrolyte to a total mass of the positive electrode active material 101 and the first solid electrolyte by a specific surface area ($m^2/g$) of the positive electrode active material 102, which is determined by the following mathematical expression (A), is 1.9 or more and 6.9 or less. Mathematical expression (A): {(mass of first solid electrolyte)/(total mass of positive electrode active material and first solid electrolyte)} $\times$ 100/(specific surface area of positive electrode active material)

FIG. 1

**Description**

TECHNICAL FIELD

The present disclosure relates to a coated active material, a positive electrode material, a positive electrode, and a battery.

BACKGROUND ART

Patent Literature 1 describes a method for producing a composite active material by coating a positive electrode active material with an oxide solid electrolyte and further with a sulfide solid electrolyte.

CITATION LIST

Patent Literature

Patent Literature 1:    JP 2016-18735A

SUMMARY OF INVENTION

Technical Problem

In the conventional art, it is desired to reduce the internal resistance of a battery.

Solution to Problem

The present disclosure provides a coated active material including:

a positive electrode active material; and
a coating layer including a first solid electrolyte and coating at least a portion of a surface of the positive electrode active material, wherein
the first solid electrolyte contains Li, Ti, M, and X,
the M is at least one element selected from the group consisting of metalloid elements and metal elements other than Li and Ti,
the X is at least one selected from the group consisting of F, Cl, Br, and I, and
a quotient obtained by dividing a ratio (%) of a mass of the first solid electrolyte to a total mass of the positive electrode active material and the first solid electrolyte by a specific surface area ($m^2$/g) of the positive electrode active material, which is determined by the following mathematical expression (A), is 1.9 or more and 6.9 or less, {(mass of first solid electrolyte)/(total mass of positive electrode active material and first solid electrolyte)} $\times$ 100/(specific surface area of positive electrode active material).        mathematical exoression (A):

Advantageous Effects of Invention

According to the technique of the present disclosure, the internal resistance of a battery can be reduced.

BRIEF DESCRIPTION OF THE DRAWINGS

FIG. 1 is a cross-sectional view showing a schematic configuration of a coated active material according to Embodiment 1.
FIG. 2 is a cross-sectional view showing a schematic configuration of a positive electrode material according to Embodiment 2.

FIG. 3 is a cross-sectional view showing a schematic configuration of a battery according to Embodiment 3.

DESCRIPTION OF EMBODIMENTS

(Findings on which the present disclosure is based)

In a battery using a solid electrolyte, oxygen may be generated from a positive electrode active material due to a side reaction between the positive electrode active material and the solid electrolyte, for example, at the last stage of charging or the like. The generated oxygen oxidizes the solid electrolyte and increases the internal resistance of the battery. The increase in internal resistance causes various problems such as a decrease in output voltage, heat generation in the battery, and a decrease in discharge capacity. Therefore, there is a need for a technology suitable for reducing the internal resistance of a battery using a solid electrolyte.

Embodiments of the present disclosure are described below with reference to the drawings. The present disclosure is not limited to the following embodiments.

(Embodiment 1)

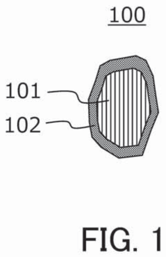

FIG. 1 is a cross-sectional view showing a schematic configuration of a coated active material according to Embodiment 1. A coated active material 100 includes a positive electrode active material 101 and a coating layer 102. The coating layer 102 includes a first solid electrolyte. The coating layer 102 coats at least a portion of the surface of the positive electrode active material 101. The coating layer 102 may coat only a portion of the surface of the positive electrode active material 101 or may uniformly coat the surface of the positive electrode active material 101.

In the coating layer 102, the first solid electrolyte contains Li, Ti, M, and X. M is at least one element selected from the group consisting of metalloid elements and metal elements other than Li and Ti. X is at least one selected from the group consisting of F, Cl, Br, and I. In the coated active material 100, a quotient obtained by dividing the ratio (%) of the mass of the first solid electrolyte to the total mass of the positive electrode active material 101 and the first solid electrolyte by the specific surface area ($m^2$/g) of the positive electrode active material 101, which is determined by the following mathematical expression (A), is 1.9 or more and 6.9 or less.

Mathematical expression (A): {(mass of first solid electrolyte)/(total mass of positive electrode active material and first solid electrolyte)} $\times$ 100/(specific surface area of positive electrode active material)

Hereinafter, the ratio of the mass of the first solid electrolyte to the total mass of the positive electrode active material 101 and the first solid electrolyte is sometimes referred to as "ratio MA1/MAt". In addition, the specific surface area of the positive electrode active material 101 is sometimes denoted as "Sm". Moreover, the quotient obtained by dividing the ratio of the mass of the first solid electrolyte to the total mass of the positive electrode active material 101 and the first solid electrolyte, by the specific surface area of the positive electrode active material 101, is sometimes referred to as "ratio MA1/MAt/specific surface area Sm".

The "metalloid elements" include B, Si, Ge, As, Sb, and Te.

The "metal elements" include all the elements included in Groups 1 to 12 of the periodic table except hydrogen and all the elements included in Groups 13 to 16 of the periodic table except B, Si, Ge, As, Sb, Te, C, N, P, O, S, and Se. That is, the metal elements are a group of elements that can become a cation when forming an inorganic compound with a halogen element.

The first solid electrolyte can be a solid electrolyte containing a halogen, a so-called halide solid electrolyte. Halide solid electrolytes have excellent oxidation resistance. Therefore, by coating the positive electrode active material 101 with the first solid electrolyte, oxidation of another solid electrolyte (for example, a second solid electrolyte in a positive electrode material according to Embodiment 2 described later) contained in the positive electrode including the coated active material 100 can be suppressed. Accordingly, the internal resistance of a battery using the positive electrode material including the coated active material 100 can be reduced.

When the ratio MA1/MAt/specific surface area Sm satisfies the above range, the positive electrode active material 101 is coated with the first solid electrolyte at a sufficient thickness, so that the above effect is sufficiently obtained. In addition, when the ratio MA1/MAt/specific surface area Sm satisfies the above range, the positive electrode material including the coated active material 100 has a sufficient electronic conductivity while the positive electrode active material 101 is coated with the first solid electrolyte at a sufficient thickness in order to obtain the above effect, that is, to suppress oxidation of another solid electrolyte. The ratio MA1/MAt/specific surface area Sm may be 2.7 or more and 6.2 or less or may be 3.5 or more and 5.0 or less.

The total mass MAt of the positive electrode active material 101 and the first solid electrolyte is the sum of a mass MA2 of the positive electrode active material 101 and a mass MA1 of the first solid electrolyte. The mass MA1 of the first solid electrolyte is the total mass of the first solid electrolyte in a powder of the coated active material 100. The mass MA2 of the positive electrode active material 101 is the total mass of the positive electrode active material 101 in the powder of the coated active material 100. That is, the ratio MA1/MAt is a value obtained from the entire powder of a certain amount of the coated active material 100. In addition, in the case where the coated active material 100 is mixed with, for example, another solid electrolyte to constitute a positive electrode material (for example, the positive electrode material according to Embodiment 2 described later), it is possible to obtain the ratio MA1/MAt using that positive electrode material. In this case, the mass MA1 of the first solid electrolyte is the total mass of the first solid electrolyte in a powder of the positive electrode material, and the mass MA2 of the positive electrode active material 101 is the total mass of the positive electrode active material 101 in the powder of the positive electrode material. Therefore, in the case where the coated active material 100 constitutes a positive electrode material, the ratio MA1/MAt can be obtained from the entire powder of a certain amount of the positive electrode material.

The above ratio MA1/MAt can be calculated from the amounts of materials charged or can be calculated by a method described below. The positive electrode using the coated active material 100 is analyzed by high-frequency inductively-coupled plasma emission spectroscopy, and elements contained in the positive electrode active material 101 but not contained in the first solid electrolyte and elements contained in the first solid electrolyte but not contained in the positive electrode active material 101 are quantitatively analyzed, whereby it is possible to analyze the mass ratio between the positive electrode active material 101 and the first solid electrolyte and calculate the ratio MA1/MAt. It is also possible to calculate the ratio MA1/MAt from the composition ratio of a particle cross-section analyzed by energy dispersive X-ray spectroscopy using a scanning electron microscope.

<Positive Electrode Active Material>

The positive electrode active material 101 includes a material having the property of occluding and releasing metal ions (for example, lithium ions). As the positive electrode active material 101, a lithium-containing transition metal oxide, a transition metal fluoride, a polyanion material, a fluorinated polyanion material, a transition metal sulfide, a transition metal oxysulfide, and a transition metal oxynitride, etc., can be used. In particular, in the case where a lithium-containing transition metal oxide is used as the positive electrode active material 101, the production cost of the battery can be reduced, and the average discharge voltage of the battery can be increased. Examples of the lithium-containing transition metal oxide include $Li(NiCoAl)O_2$, $Li(NiCoMn)O_2$, and $LiCoO_2$.

The positive electrode active material 101 has, for example, a particle shape. The particle shape of the positive electrode active material 101 is not particularly limited. The particle shape of the positive electrode active material 101 can be a spherical, ellipsoidal, flaky, or fibrous.

The specific surface area Sm of the positive electrode active material 101 may be 0.4 $m^2$/g or more and 0.8 $m^2$/g or less or may be 0.5 $m^2$/g or more and 0.7 $m^2$/g or less. In this description, the specific surface area is a BET specific surface area that can be measured by the BET method.

When the specific surface area Sm of the positive electrode active material 101 coated with the coating layer 102 is to be determined, the coating layer 102 is removed from the surface of the positive electrode active material 101, and the BET specific surface area of the obtained positive electrode active material 101 is measured, whereby the specific surface area Sm of the positive electrode active material 101 can be determined. The coating layer 102 can be removed by selecting an appropriate method in consideration of the properties of the first solid electrolyte included in the coating layer 102. For example, the coating layer 102 may be removed by dissolving the first solid electrolyte using an acid. Even in the case where the coated active material 100 is included in the positive electrode of the battery, the positive electrode active material 101 is taken out from the positive electrode by selecting an appropriate method, and the BET specific surface area of the obtained positive electrode active material 101 is measured, whereby the specific surface area Sm of the positive electrode active material 101 can be determined.

In the case where the positive electrode active material used as the positive electrode active material 101 of the coated active material 100 can be obtained, the BET specific surface area of the obtained positive electrode active material may be measured and regarded as the specific surface area Sm of the positive electrode active material 101. The case where the used positive electrode active material can be obtained includes the case where the used positive electrode active material is a commercially available product and the commercially available product can be obtained, the case where a method for producing the used positive electrode active material is clear and the same material can be produced, etc.

In the case where it is difficult to remove the coating layer 102 from the surface of the positive electrode active material 101 and it is also difficult to obtain the positive electrode active material, the specific surface area of the positive electrode active material 101 can be determined from a scanning electron microscope (SEM) image of a cross-section of the coated active material 100, and the value thereof can be regarded as the specific surface area Sm of the positive electrode active material 101. In this case, for example, the relationship between the BET specific surface area and the specific surface area determined from the cross-section SEM image of the positive electrode active material may be determined in advance to create a calibration curve, and the BET specific surface area may be determined based on the specific surface area obtained from the cross-section SEM image.

The median diameter of the coated active material 100 may be 0.1 $\mu$m or more and 100 $\mu$m or less. When the median diameter of the coated active material 100 is 0.1 $\mu$m or more, the coated active material 100 and a second solid electrolyte 201 can form a good state of dispersion in a positive electrode material 200. As a result, the charge-discharge characteristics of the battery are improved. When the median diameter of the coated active material 100 is 100 $\mu$m or less, the diffusion rate of lithium inside the coated active material 100 is sufficiently ensured. Therefore, the battery can operate at a high power.

In this description, the "median diameter" means a particle diameter at which the cumulative volume in a volume-based particle size distribution is equal to 50%. The volume-based particle size distribution is measured with, for example, a laser diffraction particle size measurement device or an image analyzer.

The specific surface area of the coated active material 100 may be 0.6 m$^2$/g or more and 1.4 m$^2$/g or less or may be 0.8 m$^2$/g or more and 1.3 m$^2$/g or less.

<Coating Layer>

The coating layer 102 includes a first solid electrolyte. The first solid electrolyte has ionic conductivity. The ionic conductivity is typically lithium-ion conductivity. The coating layer 102 is provided on the surface of the positive electrode active material 101. The coating layer 102 may include the first solid electrolyte as a main component or may include only the first solid electrolyte. The "main component" means a component included in the largest amount in mass ratio. The "including only the first solid electrolyte" means that, except for inevitable impurities, no materials other than the first solid electrolyte are intentionally added. For example, the raw materials of the first solid electrolyte, by-products produced during the production of the first solid electrolyte, etc., are included in the inevitable impurities. The ratio of the mass of the inevitable impurities to the mass of the entirety of the coating layer 102 may be 5% or less, 3% or less, 1% or less, or 0.5% or less.

The first solid electrolyte is a material containing Li, Ti, M, and X. M and X are as described above. Such a material has excellent ionic conductivity and oxidation resistance. Therefore, the positive electrode material 200 having the coating layer 102 including the first solid electrolyte improves the charge-discharge efficiency of the battery and the thermal stability of the battery.

M may include at least one selected from the group consisting of Ca, Mg, Al, Y, Ni, Fe, Cr, and Zr. M may include at least one selected from the group consisting of Ca, Mg, Al, Y, and Zr. According to this configuration, the halide solid electrolyte serving as the first solid electrolyte exhibits a high ionic conductivity.

M may include Al (= aluminum). That is, the halide solid electrolyte serving as the first solid electrolyte may include Al as a metal element. In the case where M includes Al, the halide solid electrolyte serving as the first solid electrolyte exhibits a high ionic conductivity.

The halide solid electrolyte serving as the first solid electrolyte is represented by, for example, the following composition formula (1). In the composition formula (1), $\alpha$, $\beta$, $\gamma$, and $\delta$ are each independently a value greater than 0.

$$\text{Li}_\alpha \text{Ti}_\beta \text{M}_\gamma \text{X}_\delta \ ... \qquad \text{Composition formula (1)}$$

The halide solid electrolyte represented by the composition formula (1) has a higher ionic conductivity than a halide solid electrolyte such as LiI, which is composed only of Li and a halogen element. Therefore, in the case where the halide solid electrolyte represented by the composition formula (1) is used for a battery, the charge-discharge efficiency of the battery can be improved.

In order to further increase the ionic conductivity of the first solid electrolyte, M may be Al in the composition formula (1).

The halide solid electrolyte serving as the first solid electrolyte may be represented by the following composition formula (2). In the composition formula (2), M2 is at least one selected from the group consisting of Zr, Ni, Fe, and Cr, m is the valence of M2, and $0.1 < x < 0.9$, $0 \le y < 0.1$, $0 \le z < 0.1$, and $0.8 < b \le 1.2$ are satisfied.

$$\text{Li}_{6-(4-x-4y+my)b}(\text{Ti}_{1-x-y}\text{Al}_x\text{M2}_y)_b\text{F}_{6-2z}\text{O}_z \ ... \qquad \text{Composition formula (2)}$$

In the composition formula (2), in the case where M2 includes a plurality of types of elements, m is the total value of the products of the composition ratios of the respective elements and the valences of these elements. For example, in the case where M2 includes an element Me1 and an element Me2, the composition ratio of the element Me1 is denoted by a1, the valence of the element Me1 is denoted by m1, the composition ratio of the element Me2 is denoted by a2, and the valence of the element Me2 is denoted by m2, m is represented as m1a1 + m2a2.

The halide solid electrolyte serving as the first solid electrolyte may be substantially composed of Li, Ti, Al, and X. Here, "the halide solid electrolyte is substantially composed of Li, Ti, Al, and X" means that the total molar ratio (i.e., molar fraction) of the amounts of substance of Li, Ti, Al, and X to the sum of the amounts of substance of all elements constituting the halide solid electrolyte is 90% or more. As an example, the molar ratio (i.e., molar fraction) may be 95% or more. The halide solid electrolyte may be composed of only Li, Ti, Al, and X.

In order to further enhance the ionic conductivity of the first solid electrolyte, the ratio of the amount of substance of Li to the sum of the amounts of substance of Ti and Al in the halide solid electrolyte may be 1.12 or more and 5.07 or less.

The halide solid electrolyte serving as the first solid electrolyte may be represented by the following composition formula (3). In the composition formula (3), $0 < x < 1$ and $0 < b \leq 1.5$ are satisfied.

$$Li_{6-(4-x)b}(Ti_{1-x}Al_x)_bF_6 \ldots \qquad \text{Composition formula (3)}$$

The halide solid electrolyte having such a composition has a high ionic conductivity.

In order to enhance the ionic conductivity of the first solid electrolyte, $0.1 \leq x \leq 0.9$ may be satisfied in the composition formula (3).

In the composition formula (3), $0.1 \leq x \leq 0.7$ may be satisfied.

The upper limit value and the lower limit value of the range of x in the composition formula (3) can be defined by any combination selected from numerical values of 0.1, 0.3, 0.4, 0.5, 0.6, 0.67, 0.7, 0.8, and 0.9.

In order to enhance the ionic conductivity of the first solid electrolyte, $0.8 \leq b \leq 1.2$ may be satisfied in the composition formula (3).

The upper limit value and the lower limit value of the range of b in the composition formula (3) can be defined by any combination selected from numerical values of 0.8, 0.9, 0.94, 1.0, 1.06, 1.1, and 1.2.

The halide solid electrolyte serving as the first solid electrolyte may be crystalline or amorphous.

The shape of the halide solid electrolyte serving as the first solid electrolyte is not limited. An example of this shape is a needle shape, a spherical shape, or an ellipsoid shape. The halide solid electrolyte may be in the form of particles.

In the case where the shape of the halide solid electrolyte serving as the first solid electrolyte is, for example, a particle shape (for example, spherical shape), the solid electrolyte may have a median diameter of 0.01 $\mu$m or more and 100 $\mu$m or less.

The halide solid electrolyte serving as the first solid electrolyte may be a solid electrolyte not containing sulfur. In this case, generation of sulfur-containing gases such as hydrogen sulfide gas from the solid electrolyte can be avoided. The solid electrolyte not containing sulfur means a solid electrolyte represented by a composition formula in which sulfur element is not included. Therefore, a solid electrolyte containing a very small amount of sulfur, for example, a solid electrolyte in which the content ratio of sulfur is 0.1 mass% or less, is classified as a solid electrolyte not containing sulfur. The halide solid electrolyte serving as the first solid electrolyte may further contain oxygen as an anion other than the halogen element.

The thickness of the coating layer 102 is, for example, 1 nm or more and 500 nm or less. When the thickness of the coating layer 102 is appropriately adjusted, contact between the positive electrode active material 101 and the second solid electrolyte 201 can be sufficiently suppressed. The thickness of the coating layer 102 can be specified by slicing the coated active material by a method such as ion milling and observing the cross-section of the coated active material with a transmission electron microscope. The average value of thicknesses measured at any plural number of positions (for example, five points) can be regarded as the thickness of the coating layer 102.

The coating layer 102 may include a conductive additive for the purpose of increasing the electronic conductivity. As the conductive additive, for example, graphites such as natural graphite or artificial graphite, carbon blacks such as acetylene black and Ketjen black, conductive fibers such as carbon fiber or metal fiber, fluorinated carbon, metal powders such as aluminum powder, conductive whiskers such as zinc oxide or potassium titanate, conductive metal oxides such as titanium oxide, conductive polymer compounds such as polyaniline, polypyrrole, and polythiophene, etc., can be used. When a carbon conductive additive is used, cost reduction can be achieved.

<Method for Producing Halide Solid Electrolyte as First Solid Electrolyte>

The halide solid electrolyte serving as the first solid electrolyte can be produced, for example, by the following method. Here, a method for producing the halide solid electrolyte represented by the composition formula (1) is described as an example.

Raw material powders are prepared and mixed to have a target composition. The raw material powders may be, for example, a halide.

As an example, in the case where the target composition is $Li_{2.7}Ti_{0.3}Al_{0.7}F_6$, LiF, $TiF_4$, and $AlF_3$ are mixed in a molar ratio of about 2.7:0.3:0.7. The raw material powders may be mixed in a pre-adjusted molar ratio so as to compensate for compositional changes that may occur during a synthesis process.

The raw material powders are reacted with each other mechanochemically (i.e., using a mechanochemical milling method) in a mixing device such as a planetary ball mill to obtain a reaction product. The reaction product may be fired in a vacuum or in an inert atmosphere. Alternatively, the mixture of the raw material powders may be fired in a vacuum or in an inert atmosphere to obtain a reaction product. The firing is performed, for example, at a temperature of 100°C or higher and 400°C or lower for 1 hour or longer. In order to suppress compositional changes during firing, the raw material powders may be fired in a sealed container such as a quartz tube.

The halide solid electrolyte is obtained by these methods.

<Method for Producing Coated Active Material>

The coated active material 100 can be produced by the following method.

A powder of the positive electrode active material 101 and a powder of the first solid electrolyte are mixed in an appropriate ratio to obtain a mixture. The mixture is subjected to a milling process to apply mechanical energy to the mixture. A mixing device such as a ball mill can be used for the milling process. In order to suppress oxidation of the materials, the milling process may be performed in a dry and inert atmosphere.

The coated active material 100 may be produced by a dry particle composite formation method. The processing by the dry particle composite formation method includes applying at least one mechanical energy selected from the group consisting of impact, compression, and shear to the positive electrode active material 101 and the first solid electrolyte. The positive electrode active material 101 and the first solid electrolyte are mixed in an appropriate ratio.

A device used to produce the coated active material 100 is not particularly limited and can be a device capable of applying mechanical energy of impact, compression, and shear to the mixture of the positive electrode active material 101 and the first solid electrolyte. Examples of the device capable of applying mechanical energy include ball mills and compression shear processing devices (particle composite formation devices) such as "MECHANO FUSION" (manufactured by HOSOKAWA MICRON CORPORATION), "NOBILTA" (manufactured by HOSOKAWA MICRON CORPORATION), and "BALANCE GRAN" (manufactured by FREUND-TURBO CORPORATION).

"MECHANO FUSION" is a particle composite formation device using dry mechanical composite formation technology by applying strong mechanical energy to a plurality of different raw material powders. In MECHANO FUSION, mechanical energy of compression, shear, and friction is applied to the raw material powders charged between a rotating container and a press head. Accordingly, composite formation of the particles occurs.

"NOBILTA" is a particle composite formation device using dry mechanical composite formation technology, which is an advancement of particle composite formation technology, in order to perform composite formation with nanoparticles as raw materials. NOBILTA produces composite particles by applying mechanical energy of impact, compression, and shear to a plurality of types of raw material powders.

"BALANCE GRAN" is a particle composite formation device using dry mechanical composite formation technology, which is an advancement of particle composite formation technology, in order to perform mixing and composite formation with particles as raw materials. BALANCE GRAN produces composite particles by applying impact energy to a plurality of types of raw material powders.

In "BALANCE GRAN", processing in which the raw material powders are caused to collide with each other by rotating a chopper that stirs and circulates powders, in a horizontal cylindrical mixing container, is repeated multiple times. Accordingly, an impact force can be applied to the mixture to produce composite particles of the positive electrode active material 101 and the first solid electrolyte. By adjusting conditions such as the rotation speed of the chopper, the processing time, and the charged amount, the thickness of the coating layer 102, the rate of coating the positive electrode active material 101 with the first solid electrolyte, etc., can be controlled.

However, the processing by the above-described device is not essential. The coated active material 100 may be produced by mixing the positive electrode active material 101 and the first solid electrolyte using a mortar, a mixer, or the like. The first solid electrolyte may be deposited on the surface of the positive electrode active material 101 by various methods such as a spray method, a spray dry coating method, an electrodeposition method, a dipping method, and a mechanical mixing method using a dispersing machine.

(Embodiment 2)

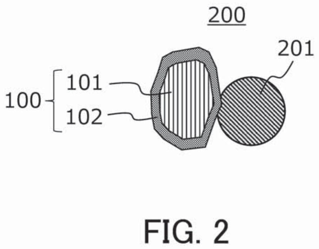

FIG. 2 is a cross-sectional view showing a schematic configuration of a positive electrode material according to Embodiment 2. A positive electrode material 200 includes a coated active material 100 and a second solid electrolyte 201. The coated active material 100 is the coated active material 100 described in Embodiment 1. As described in Embodiment 1, the coated active material 100 can suppress oxidation of the second solid electrolyte 201. Accordingly, the positive electrode material 200 can reduce the internal resistance of a battery.

In the positive electrode material 200, the second solid electrolyte 201 and the coated active material 100 may be in contact with each other. At this time, the coating layer 102 and the second solid electrolyte 201 are in contact with each other. The positive electrode material 200 may include a plurality of particles of the second solid electrolyte 201 and a plurality of particles of the coated active material 100.

The median diameter of the coated active material 100 may be larger than the median diameter of the second solid electrolyte 201. Accordingly, the positive electrode active material 101 and the second solid electrolyte 201 can form a good state of dispersion.

The coated active material 100, the positive electrode active material 101, the coating layer 102, and the first solid electrolyte are as described in Embodiment 1, and thus the detailed description thereof is omitted here. The second solid electrolyte 201, other materials included in the positive electrode material 200, and a method for producing the positive electrode material 20 are described below.

<Second Solid Electrolyte>

The second solid electrolyte 201 may include at least one selected from the group consisting of a halide solid electrolyte, a sulfide solid electrolyte, an oxide solid electrolyte, a polymer solid electrolyte, and a complex hydride solid electrolyte.

Examples of the halide solid electrolyte include the materials described above as the first solid electrolyte. That is, the composition of the second solid electrolyte 201 may be the same as or different from the composition of the first solid electrolyte.

As the sulfide solid electrolyte, for example, $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, $Li_{10}GeP_2S_{12}$, etc., can be used. LiX, $Li_2O$, $M'O_q$, $Li_pMO_q$, etc., may be added to these. Here, X in "LiX" is at least one selected from the group consisting of F, Cl, Br, and I. In "$MO_q$" and "$Li_pMO_q$", the element M is at least one selected from the group consisting of P, Si, Ge, B, Al, Ga, In, Fe, and Zn. In "$MO_q$" and "$Li_pMO_q$", p and q are each an independent natural number.

The oxide solid electrolyte is a solid electrolyte containing oxygen. The oxide solid electrolyte may further contain, as an anion other than oxygen, an anion other than sulfur and the halogen element.

As the oxide solid electrolyte, for example, NASICON solid electrolytes such as $LiTi_2(PO_4)_3$ and an element-substituted substance thereof, $(LaLi)TiO_3$-based perovskite solid electrolytes, LISICON solid electrolytes such as $Li_{14}ZnGe_4O_{16}$, $Li_4SiO_4$, $LiGeO_4$, and element-substituted substances thereof, garnet solid electrolytes such as $Li_7La_3Zr_2O_{12}$ and an element-substituted substance thereof, $Li_3PO_4$ and an N-substituted substance thereof, glass or glass-ceramics in which a material such as $Li_2SO_4$ or $Li_2CO_3$ is added to a base material including a Li-B-O compound such as $LiBO_2$ and $Li_3BO_3$, etc., can be used.

As the polymer solid electrolyte, for example, a compound of a polymer compound and a lithium salt can be used. The polymer compound may have an ethylene oxide structure. The polymer compound having an ethylene oxide structure can contain a large amount of the lithium salt. Therefore, the ionic conductivity can be further increased. Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone, or a mixture of two or more lithium salts selected from these may be used.

As the complex hydride solid electrolyte, for example, $LiBH_4\text{-}LiI$, $LiBH_4\text{-}P_2S_5$, etc., can be used.

The second solid electrolyte 201 may have a lithium-ion conductivity higher than the lithium-ion conductivity of the first solid electrolyte.

The second solid electrolyte 201 may contain, for example, Li and S. In other words, the second solid electrolyte 201 may include a sulfide solid electrolyte. The sulfide solid electrolyte has a high ionic conductivity and can improve the charge-discharge efficiency of the battery. On the other hand, the sulfide solid electrolyte has poor oxidation resistance, but by applying the technique of the present disclosure, high effects are obtained.

The second solid electrolyte 201 may be in contact with the positive electrode active material 101 via the coating layer 102.

The second solid electrolyte 201 may include inevitable impurities such as starting raw materials used in synthesizing the solid electrolyte, by-products, and decomposition products. This also applies to the first solid electrolyte.

<Other Materials>

The positive electrode material 200 may include a binder for the purpose of improving adhesion between particles. The binder is used to improve the binding properties of the materials constituting a positive electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, poly(methyl acrylate), poly(ethyl acrylate), poly(hexyl acrylate), polymethacrylic acid, poly(methyl methacrylate), poly(ethyl methacrylate), poly(hexyl methacrylate), polyvinyl acetate, polyvinylpyrrolidone, polyether, polycarbonate, polyether sulfone, polyether ketone, polyether ether ketone, polyphenylene sulfide, poly(hexafluoropropylene), styrene-butadiene rubber, carboxymethyl cellulose, and ethyl cellulose. In addition, a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylate, acrylic acid, and hexadiene, can also be used. One selected from these may be used alone, or two or more selected from these may be used in combination.

The binder may be an elastomer for the reason of having excellent binding properties. Elastomers are polymers that have rubber elasticity. The elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One selected from these may be used alone, or two or more selected from these may be used in combination.

The positive electrode material 200 may include a conductive additive for the purpose of enhancing electronic conductivity. As the conductive additive, for example, graphites such as natural graphite or artificial graphite, carbon blacks such as acetylene black and Ketjen black, conductive fibers such as carbon fiber or metal fiber, fluorinated carbon, metal powders such as aluminum powders, conductive whiskers such as zinc oxide or potassium titanate, conductive metal oxides such as titanium oxide, conductive polymer compounds such as polyaniline, polypyrrole, and polythiophene, etc., can be used. When a carbon conductive additive is used, cost reduction can be achieved.

<Method for Producing Positive Electrode Material>

The positive electrode material 200 is obtained by mixing the coated active material 100 and the second solid electrolyte 201. A method for mixing the coated active material 100 and the second solid electrolyte 201 is not particularly limited. The coated active material 100 and the second solid electrolyte 201 may be mixed using a tool such as a mortar, or the coated active material 100 and the second solid electrolyte 201 may be mixed using a mixing device such as a ball mill.

(Embodiment 3)

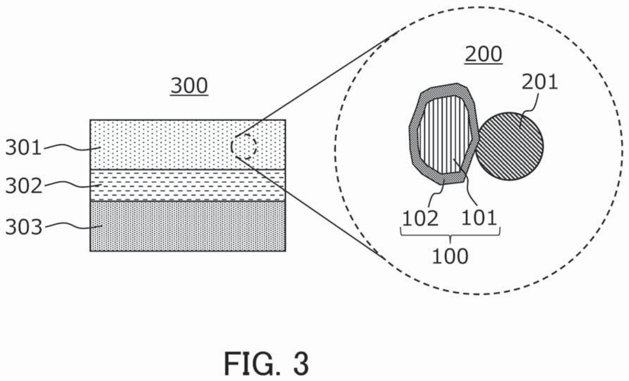

FIG. 3 is a cross-sectional view showing a schematic configuration of a battery according to Embodiment 3. A battery 300 includes a positive electrode 301, a separator layer 302, and a negative electrode 303. The separator layer 302 is placed between the positive electrode 301 and the negative electrode 303. The positive electrode 301 includes the positive electrode material 200 described in Embodiment 2. According to this configuration, the internal resistance of the battery 300 can be reduced.

The thickness of each of the positive electrode 301 and the negative electrode 303 may be 10 $\mu$m or more and 500 $\mu$m or less. When the thicknesses of the positive electrode 301 and the negative electrode 303 are each 10 $\mu$m or more, a sufficient energy density of the battery can be ensured. When the thicknesses of the positive electrode 301 and the negative electrode 303 are each 500 $\mu$m or less, operation of the battery 300 at a high power can be achieved.

The separator layer 302 is a layer including an electrolyte material. The separator layer 302 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiment 1.

The thickness of the separator layer 302 may be 1 $\mu$m or more and 300 $\mu$m or less. When the thickness of the separator layer 302 is 1 $\mu$m or more, the positive electrode 301 and the negative electrode 303 can be separated more reliably. When the thickness of the separator layer 302 is 300 $\mu$m or less, operation of the battery 300 at a high power can be achieved.

The negative electrode 303 includes, as a negative electrode active material, a material having the property of occluding and releasing metal ions (for example, lithium ions).

As the negative electrode active material, a metal material, a carbon material, an oxide, a nitride, a tin compound, a silicon compound, etc., can be used. The metal material may be a single metal. Alternatively, the metal material may be an alloy. Examples of the metal material include lithium metal and lithium alloys. Examples of the carbon material include natural graphite, coke, partially graphitized carbon, carbon fiber, spherical carbon, artificial graphite, and amorphous carbon. From the viewpoint of capacity density, silicon (Si), tin (Sn), silicon compounds, tin compounds, etc., can be suitably used.

The median diameter of particles of the negative electrode active material may be 0.1 $\mu$m or more and 100 $\mu$m or less.

The negative electrode 303 may include other materials such as a solid electrolyte. As the solid electrolyte, the materials described in Embodiment 1 can be used.

(Other Embodiments)

(Additional notes)

The following techniques are disclosed by the description of the above embodiments.

(Technique 1)

A coated active material including:

a positive electrode active material;
a coating layer including a first solid electrolyte and coating at least a portion of a surface of the positive electrode active material, wherein
the first solid electrolyte contains Li, Ti, M, and X,
the M is at least one element selected from the group consisting of metalloid elements and metal elements other than Li and Ti,
the X is at least one selected from the group consisting of F, Cl, Br, and I, and
a quotient obtained by dividing a ratio (%) of a mass of the first solid electrolyte to a total mass of the positive electrode active material and the first solid electrolyte by a specific surface area ($m^2$/g) of the positive electrode active material, which is determined by the mathematical expression (A), is 1.9 or more and 6.9 or less.

Owing to this configuration, the internal resistance of a battery can be reduced.

(Technique 2)

The coated active material according to Technique 1, wherein
the quotient is 2.7 or more and 6.2 or less.
According to this configuration, the internal resistance of the battery can be further reduced.

(Technique 3)

The coated active material according to Technique 2, wherein
the quotient is 3.5 or more and 5.0 or less. According to this configuration, the internal resistance of the battery can be reduced.

(Technique 4)

The coated active material according to any one of Techniques 1 to 3, wherein

the M includes at least one selected from the group consisting of Ca, Mg, Al, Y, Ni, Fe, Cr, and Zr. According to this configuration, the first solid electrolyte exhibits a high ionic conductivity.

(Technique 5)

The coated active material according to any one of Techniques 1 to 4, wherein
the M includes Al.
According to this configuration, the first solid electrolyte exhibits a high ionic conductivity.

(Technique 6)

The coated active material according to any one of Techniques 1 to 5, wherein

the first solid electrolyte is represented by the following composition formula (1),

$$Li_\alpha Ti_\beta M_\gamma X_\delta \ldots \qquad \text{Composition formula (1),}$$

where $\alpha$, $\beta$, $\gamma$, and $\delta$ are each independently a value greater than 0.

In the case where the first solid electrolyte represented by the composition formula (1) is used for a battery, the output characteristics of the battery can be improved.

(Technique 7)

The coated active material according to any one of Techniques 1 to 6, wherein

the first solid electrolyte is represented by the following composition formula (2),

$$Li_{6-(4-x-4y+my)b}(Ti_{1-x-y}Al_xM2_y)_bF_{6-2z}O_z \ldots \qquad \text{Composition formula (2),}$$

where M2 is at least one selected from the group consisting of Zr, Ni, Fe, and Cr, m is a valence of the M2, and $0.1 < x < 0.9$, $0 \leq y < 0.1$, $0 \leq z < 0.1$, and $0.8 < b \leq 1.2$ are satisfied.

According to this configuration, the output characteristics of the battery can be improved.

(Technique 8)

A positive electrode material including:

the coated active material according to any one of Techniques 1 to 7; and
a second solid electrolyte.

According to this configuration, the internal resistance of the battery can be reduced.

(Technique 9)

The positive electrode material according to Technique 8, wherein
the second solid electrolyte contains Li and S.
According to this configuration, the charge-discharge efficiency of the battery can be improved.

(Technique 10)

A positive electrode including the positive electrode material according to Technique 8. According to this configuration, the internal resistance of the battery can be reduced.

(Technique 11)

A battery including the positive electrode according to Technique 10.
According to this configuration, the internal resistance of the battery can be reduced.

Examples

The present disclosure is described in detail below using examples and comparative examples. The electrode and the battery of the present disclosure are not limited to the following examples.

<Example 1>

[Preparation of First Solid Electrolyte]

In an argon glove box with a dew point of -60°C or lower, raw material powders of LiF, $TiF_4$, and $AlF_3$ were weighed in a molar ratio of $LiF:TiF_4:AlF_3 = 2.5:0.5:0.5$. These were pulverized and mixed in a mortar to obtain a mixture. The obtained mixed powder was subjected to a milling process at 500 rpm for 12 hours using a planetary ball mill. Thus, a powder of a halide solid electrolyte was obtained as a first solid electrolyte of Example 1. The first solid electrolyte according to Example 1 had a composition represented by $Li_{2.5}Ti_{0.5}Al_{0.5}F_6$ (hereinafter referred to as "LTAF").

[Preparation of Coated Active Material]

As a positive electrode active material, a powder of $Li(NiCoAl)O_2$ (hereinafter referred to as "NCA") was prepared. The BET specific surface area of the NCA was 0.58 $m^2/g$. A coating layer made of the LTAF was formed on the surface of the NCA. The coating layer was formed by a shearing process using a particle mixing device (BALANCE GRAN, manufactured by FREUND-TURBO CORPORATION). Specifically, the NCA and the LTAF were weighed in a mass ratio of 98.39:1.61 and processed under the conditions of rotation speed: 3100 rpm and processing time: 1 hour. Accordingly, a coated active material of Example 1 was obtained.

[Preparation of Second Solid Electrolyte]

In an argon glove box with a dew point of -60°C or lower, raw material powders of $Li_2S$ and $P_2S_5$ were weighed in a molar ratio of $Li_2S:P_2S_5 = 75:25$. These were pulverized and mixed in a mortar to obtain a mixture. Then, the mixture was subjected to a milling process under the conditions of 10 hours and 510 rpm using a planetary ball mill (Model P-7, manufactured by FRITSCH). Accordingly, a glassy solid electrolyte was obtained. The glassy solid electrolyte was subjected to heat treatment in an inert atmosphere under the conditions of 270°C and 2 hours. Accordingly, $Li_2S$-$P_2S_5$ (hereinafter referred to as "LPS") which is a glass-ceramic sulfide solid electrolyte was obtained as a second solid electrolyte.

[Preparation of Positive Electrode Material]

In an argon glove box, the coated active material of Example 1 and the LPS were weighed such that the volume ratio of the coated active material to the sulfide solid electrolyte was 70:30. These were mixed in an agate mortar to prepare a positive electrode material of Example 1.

<Example 2>

A coated active material of Example 2 was obtained in the same manner as in Example 1, except that the mass ratio of the NCA to the LTAF was changed to 97.55:2.45. The BET specific surface area of the NCA was 0.58 $m^2$/g, which is the same as in Example 1.
A positive electrode material of Example 2 was obtained in the same manner as in Example 1, using the coated active material of Example 2.

<Example 3>

A coated active material of Example 3 was obtained in the same manner as in Example 1, except that the mass ratio of the NCA to the LTAF was changed to 96.42:3.58. The BET specific surface area of the NCA was 0.58 $m^2$/g, which is the same as in Example 1.
A positive electrode material of Example 3 was obtained in the same manner as in Example 1, using the coated active material of Example 3.

<Example 4>

A coated active material of Example 4 was obtained in the same manner as in Example 1, except that an NCA having a BET specific surface area of 0.68 $m^2$/g was used and the mass ratio of the NCA to the LTAF was changed to 97.55:2.45.
A positive electrode material of Example 4 was obtained in the same manner as in Example 1, using the coated active material of Example 4.

<Comparative Example 1>

A coated active material of Comparative Example 1 was obtained in the same manner as in Example 1, except that the mass ratio of the NCA to the LTAF was changed to 98.9:1.1. The BET specific surface area of the NCA was 0.58 $m^2$/g, which is the same as in Example 1.
A positive electrode material of Comparative Example 1 was obtained in the same manner as in Example 1, using the coated active material of Comparative Example 1.

<Comparative Example 2>

A coated active material of Comparative Example 2 was obtained in the same manner as in Example 1, except that the mass ratio of the NCA to the LTAF was changed to 95.99:4.01. The BET specific surface area of the NCA was 0.58 $m^2$/g, which is the same as in Example 1.
A positive electrode material of Comparative Example 2 was obtained in the same manner as in Example 1, using the coated active material of Comparative Example 2.

In the coated active materials of Examples 1 to 4, Comparative Example 1, and Comparative Example 2, the quotient obtained by dividing the ratio (%) of the mass of the LTAF to the total mass of the NCA and the LTAF by the specific surface area ($m^2/g$) of the NCA was as shown in Table 1. In Table 1, this quotient is represented as "LTAF mass/(LTAF mass + NCA mass)/(NCA specific surface area)". The ratio of the mass of the LTAF to the total mass of the NCA and the LTAF was obtained from the amounts of the NCA and the LTAF charged when the coated active material was prepared. The present inventors also obtained the ratio of the mass of the LTAF to the total mass of the NCA and the LTAF by analyzing the positive electrode using the coated active material by high-frequency inductively-coupled plasma emission spectroscopy, and as a result, the value of this ratio was almost the same as a value obtained from the charged amounts.

[Production of Battery]

The positive electrode material was weighed so as to contain 14 mg of the NCA. The LPS and the positive electrode material were stacked in this order inside an insulating outer cylinder. The obtained stack was pressure-formed at a pressure of 720 MPa. Next, metal lithium was placed so as to be in contact with the LPS layer, and the stack was again pressure-formed at a pressure of 40 MPa. Accordingly, a stack composed of a positive electrode, a solid electrolyte layer, and a negative electrode was produced. Next, current collectors made of stainless steel were placed on the upper and lower portions of the stack. A current collecting lead was attached to each current collector. Next, the outer cylinder was sealed using an insulating ferrule to isolate the inside of the outer cylinder from the external atmosphere. Through the above steps, batteries of Examples 1 to 5 and Comparative Example 1 were produced. A surface pressure of 150 MPa was applied to each battery by restraining the battery from above and below with four bolts.

[Evaluation of Battery Characteristics]

The battery was placed in a thermostatic chamber at 25°C. The battery was charged at a constant current of 147 μA, which corresponds to a rate of 0.05C (20-hour rate) relative to the theoretical capacity of the battery, until a voltage of 4.3 V was reached. Then, the battery was discharged at a constant current of 147 μA, which corresponds to a rate of 0.05C (20-hour rate) relative to the theoretical capacity of the battery, until a voltage of 3.6 V was reached. After discharging to 3.6 V, the battery was discharged at a constant current of 0.136 A, which corresponds to a rate of 46.4C relative to the theoretical capacity of the battery, for 0.1 seconds, and the resistance of the battery was obtained from the voltage drop at this time. The results are shown in Table 1.

[Table 1]

|  | LTAF mass/(LTAF + NCA mass) /(NCA specific surface area) | Resistance (Ω) |
|---|---|---|
| Example 1 | 2.78 | 7.30 |
| Example 2 | 4.22 | 7.35 |
| Example 3 | 6.17 | 7.26 |
| Example 4 | 3.60 | 7.32 |
| Comparative Example 1 | 1.89 | 7.60 |
| Comparative Example 2 | 6.91 | 7.49 |

<Discussion>

As shown in Table 1, the resistance was reduced in the batteries of Examples 1 to 4 in which the positive electrode active material was coated with an optimum amount of the first solid electrolyte, which was a halide solid electrolyte. The batteries of Examples 1 to 4 had lower resistance than the battery of Comparative Example 1. This suggests that in Comparative Example 1, the coating of the positive electrode active material with the first solid electrolyte was insufficient. In addition, the batteries of Examples 1 to 4 had lower resistance than the battery of Comparative Example 2. This is inferred to be because the coating of the positive electrode active material with the first solid electrolyte was thick in Comparative Example 2, resulting in an increase in electronic resistance.

It has been confirmed that the halide solid electrolyte exhibits the same level of ionic conductivity even when at least one element selected from the group consisting of metalloid elements and metal elements other than Li and Ti, for example, Ca, Mg, Y, Ni, Fe, Cr, or Zr, is used instead of Al (for example, Japanese Patent Application No. 2020-048461 by the present applicants). Therefore, a halide solid electrolyte containing at least one selected from the group consisting of these elements, instead of Al or together with Al, can be used. In this case as well, it is possible to charge and discharge the battery, and an effect of suppressing an oxidation reaction of the second solid electrolyte (for example, a sulfide solid electrolyte) to suppress an increase in resistance is obtained. In addition, oxidation of the sulfide solid electrolyte occurs mainly when the sulfide solid electrolyte comes into contact with the positive electrode active material and electrons are extracted from the sulfide solid electrolyte. Therefore, according to the technique of the present disclosure, even when an active material other than the NCA is used, an effect of suppressing oxidation of the second solid electrolyte (for example, a sulfide solid electrolyte) is obtained.

INDUSTRIAL APPLICABILITY

The technique of the present disclosure is useful, for example, for all-solid-state lithium secondary batteries.

**Claims**

1.    A coated active material comprising:

a positive electrode active material; and
a coating layer comprising a first solid electrolyte and coating at least a portion of a surface of the positive electrode active material, wherein
the first solid electrolyte comprises Li, Ti, M, and X,
the M is at least one element selected from the group consisting of metalloid elements and metal elements other than Li and Ti,
the X is at least one selected from the group consisting of F, Cl, Br, and I, and
a quotient obtained by dividing a ratio (%) of a mass of the first solid electrolyte to a total mass of the positive electrode active material and the first solid electrolyte by a specific surface area ($m^2$/g) of the positive electrode active material, which is determined by the following mathematical expression (A), is 1.9 or more and 6.9 or less, {(mass of first solid electrolyte)/(total mass of positive electrode active material and first solid electrolyte)} $\times$ 100/(specific surface area of positive electrode active material).    mathematical expression (A):l

2.    The coated active material according to claim 1, wherein
the quotient is 2.7 or more and 6.2 or less.

3.    The coated active material according to claim 2, wherein
the quotient is 3.5 or more and 5.0 or less.

4.    The coated active material according to claim 1, wherein
the M comprises at least one selected from the group consisting of Ca, Mg, Al, Y, Ni, Fe, Cr, and Zr.

5.    The coated active material according to claim 4, wherein
the M comprises Al.

6.    The coated active material according to claim 1, wherein

the first solid electrolyte is represented by the following composition formula (1),

$Li_{\alpha}Ti_{\beta}M_{\gamma}X_{\delta}$ ...            Composition formula (1),

where $\alpha$, $\beta$, $\gamma$, and $\delta$ are each independently a value greater than 0.

7.    The coated active material according to claim 1, wherein

the first solid electrolyte is represented by the following composition formula (2),

$$\mathrm{Li}_{6-(4-x-4y+my)b}(\mathrm{Ti}_{1-x-y}\mathrm{Al}_x\mathrm{M2}_y)_b\mathrm{F}_{6-2z}\mathrm{O}_z \;... \qquad \text{Composition formula (2),}$$

where M2 is at least one selected from the group consisting of Zr, Ni, Fe, and Cr, m is a valence of the M2, and $0.1 < x < 0.9$, $0 \le y < 0.1$, $0 \le z < 0.1$, and $0.8 < b \le 1.2$ are satisfied.

8.  A positive electrode material comprising:

    the coated active material according to any one of claims 1 to 7; and
    a second solid electrolyte.

9.  The positive electrode material according to claim 8, wherein
    the second solid electrolyte comprises Li and S.

10. A positive electrode comprising the positive electrode material according to claim 8.

11. A battery comprising the positive electrode according to claim 10.

FIG. 1

FIG. 2

FIG. 3

## INTERNATIONAL SEARCH REPORT

| | |
|---|---|
| International application No. | |
| | **PCT/JP2024/017534** |

**A. CLASSIFICATION OF SUBJECT MATTER**

*H01M 4/36*(2006.01)i; *H01M 4/62*(2006.01)i
FI:   H01M4/36 C; H01M4/62 Z

According to International Patent Classification (IPC) or to both national classification and IPC

**B. FIELDS SEARCHED**

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2023/037815 A1 (PANASONIC INTELLECTUAL PROPERTY MANAGEMENT CO., LTD.) 16 March 2023 (2023-03-16)<br>    example 1 | 1-11 |
| Y | WO 2023/037769 A1 (PANASONIC INTELLECTUAL PROPERTY MANAGEMENT CO., LTD.) 16 March 2023 (2023-03-16)<br>    paragraphs [0026], [0029]-[0030], examples | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/017534**

| Patent document cited in search report | | | Publication date (day/month/year) | Patent family member(s) | | | Publication date (day/month/year) |
|---|---|---|---|---|---|---|---|
| WO | 2023/037815 | A1 | 16 March 2023 | CN | 117882211 | A | |
| WO | 2023/037769 | A1 | 16 March 2023 | CN | 117916906 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016018735 A

- JP 2020048461 A